# EUROPEAN PATENT SPECIFICATION

(11) **EP 3 050 909 B1**
(45) Date of publication and mention of the grant of the patent: **28.10.2020**
(21) Application number: 15841034.0
(22) Date of filing: 04.12.2015
(51) Int. Cl.: C08G 64/38, C08G 64/18, C08G 77/448, C08L 69/00

(54) **COPOLYCARBONATE AND COMPOSITION COMPRISING SAME**
COPOLYCARBONAT UND ZUSAMMENSETZUNG DAMIT
COPOLYCARBONATE ET COMPOSITION LE COMPRENANT

(30) Priority: 04.12.2014 KR 20140173005; 03.12.2015 KR 20150171768
(43) Date of publication of application: 03.08.2016
(73) Proprietor: LG Chem, Ltd., Seoul 07336 (KR)
(72) Inventor: SON, Young Wook, Daejeon 34122 (KR); HONG, Moo Ho, Daejeon 34122 (KR); LEE, Ki Jae, Daejeon 34122 (KR); PARK, Jung Jun, Daejeon 34122 (KR)
(74) Representative: Goddar, Heinz J.
(86) International application number: PCT/KR2015/013246
(87) International publication number: WO 2016/089171

(56) References cited:
- EP-A2- 0 522 752
- WO-A1-2013/100606
- WO-A2-2013/175445
- GB-A- 1 515 585
- JP-A- 2012 116 915
- JP-B2- 3 457 805
- KR-A- 20140 027 199
- KR-A- 20140 116 921

## Description

### [CROSS-REFERENCE TO RELATED APPLICATION(S)]

This application claims the benefit of Korean Patent Application No. 10-2014-0173005 filed on December 4, 2014 and Korean Patent Application No. 10-2015-0171768 filed on December 3, 2015 with the Korean Intellectual Property Office.

### [TECHNICAL FIELD]

The present invention relates to a copolycarbonate being economically produced, and capable of improving impact strength at low temperature, YI (Yellow Index) and melt index simultaneously, and to a composition comprising the same.

### [BACKGROUND OF ART]

Polycarbonate resins are prepared by condensation-polymerization of an aromatic diol such as bisphenol A with a carbonate precursor such as phosgene and have excellent impact strength, dimensional stability, heat resistance and transparency. Thus, the polycarbonate resins have application in a wide range of uses, such as exterior materials of electrical and electronic products, automobile parts, building materials, and optical components.

Recently, in order to apply these polycarbonate resins to more various fields, many studies have been made to obtain desired physical properties by copolymerizing two or more aromatic diol compounds having different structures from each other and introducing units having different structures in a main chain of the polycarbonate.

Especially, studies for introducing a polysiloxane structure in a main chain of the polycarbonate have been undergone, but most of these technologies have disadvantages in that production costs are high, and when a particular physical property is increased, the other physical properties are conversely lowered.

EP 0522752 A2 discloses thermoplastic block terpolymers, which comprise:(a) about 1 to about 30 % by weight of the terpolymer of a siloxane from recurring polysiloxane blocks of the formula (I), (b) about 70 to about 99% by weight of the terpolymer of a polycarbonate-aliphatic polyester condensation copolymer block consisting essentially of from about 80 to about 99% by weight, relative to the total weight of recurring units in (b), of polycarbonate units of the formula (II) and from 1 to 20% by weight, relative to the total weight of the recurring units in (b), of aliphatic diester units of the formula (III). These polymers exhibit advantageous melt flows, advantageous low temperature properties and resistance to solvents, chemicals, hydrolysis and to photo-decomposition.

Given the above circumstances, the present inventors have conducted intensive studies to overcome the above-mentioned disadvantages encountered with the prior arts and develop a copolycarbonate having improved impact strength at low temperature, YI (Yellow Index) and melt index simultaneously. As a result, the inventors have found that a copolycarbonate in which a specific siloxane compound is introduced in a main chain of the polycarbonate as described below satisfies the above-described properties, thereby completing the present invention.

### [DETAILED DESCRIPTION OF THE INVENTION]

### [Technical Problem]

It is an object of the present invention to provide a copolycarbonate capable of improving impact strength at low temperature, YI (Yellow Index) and melt index simultaneously.

It is another object of the present invention to provide a composition comprising the above-mentioned copolycarbonate.

### [Technical Solution]

In order to achieve the above objects, the present invention provides a copolycarbonate comprising:
i) a repeating unit represented by the following Chemical Formula 1, ii) a repeating unit represented by the following Chemical Formula 2, and iii) a repeating unit represented by the following Chemical Formula 3 and a repeating unit represented by the following Chemical Formula 4,
   wherein the copolycarbonate has a weight average molecular weight of 1,000 to 100,000: 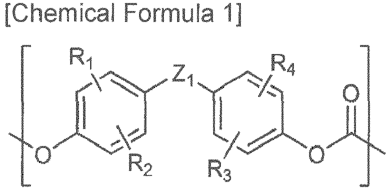 in the Chemical Formula 1,
   R₁, R₂, R₃ and R₄ are each independently hydrogen, C₁₋₁₀ alkyl, C₁₋₁₀ alkoxy, or halogen, and
   Z₁ is C₁₋₁₀ alkylene unsubstituted or substituted with phenyl, C₃₋₁₅ cycloalkylene unsubstituted or substituted with C₁₋₁₀ alkyl, O, S, SO, SO₂, or CO, 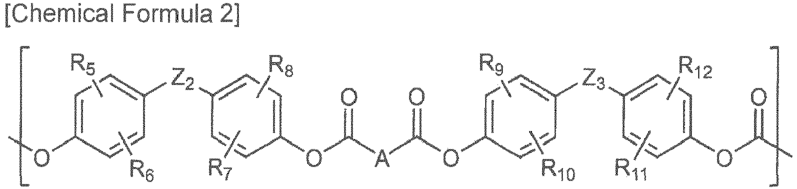
   in the Chemical Formula 2,
   R₅, R₆, R₇, R₈, R₉, R₁₀, R₁₁ and R₁₂ are each independently hydrogen, C₁₋₁₀ alkyl, C₁₋₁₀ alkoxy, or halogen, and
   Z₂ and Z₃ are each independently C₁₋₁₀ alkylene unsubstituted or substituted with phenyl, C₃₋₁₅ cycloalkylene unsubstituted or substituted with C₁₋₁₀ alkyl, O, S, SO, SO₂, or CO, and
   A is C₁₋₁₅ alkylene, 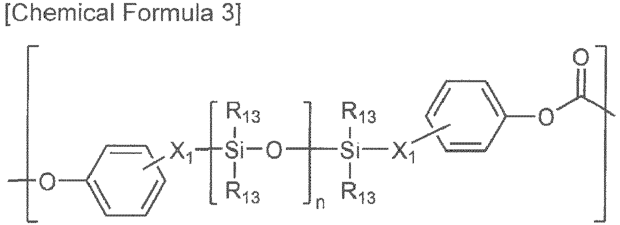
   in the Chemical Formula 3,
   each of X₁ is independently C₁₋₁₀ alkylene,
   each of R₁₃ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
   n is an integer of 10 to 200, 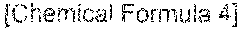 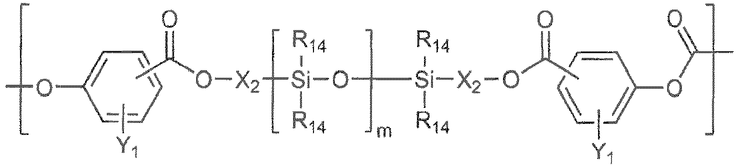
   in the Chemical Formula 4,
   each of X₂ is independently C₁₋₁₀ alkylene,
   each of Y₁ is independently hydrogen, C₁₋₆ alkyl, halogen, hydroxy, C₁₋₆ alkoxy, or C₆₋₂₀ aryl,
   each of R₁₄ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
   m is an integer of 10 to 200,

The polycarbonate resin is a resin prepared by condensation-polymerization of an aromatic diol such as bisphenol A with a carbonate precursor such as phosgene and the resin itself has excellent mechanical properties, but there is a need to satisfy various physical properties simultaneously depending on the field of application. In particular, the polycarbonate resin may improve specific physical properties by changing a part of the structure, but most of them have characteristics that when any one of the physical properties is increased, the other properties are conversely lowered.

Therefore, particularly, in order to improve impact strength at low temperature, YI (Yellow Index) and melt index simultaneously, the present invention introduces the repeating unit of Chemical Formula 2 and the repeating units of the Chemical Formulae 3 and 4, in addition to the conventional polycarbonate structure comprising the repeating unit as represented by Chemical Formula 1. By introducing the repeating units as represented by Formulae 2 to 4, various physical properties of the polycarbonate can be improved without sacrificing other properties.

Hereinafter, the present invention will be described in detail.

### Repeating unit represented by Chemical Formula 1

The repeating unit represented by Chemical Formula 1 forms a basic skeleton of the copolycarbonate resin according to the present invention, and it is formed by reacting an aromatic diol compound and a carbonate precursor.

Preferably, R₁, R₂, R₃ and R₄ are each independently hydrogen, methyl, chloro, or bromo.

Also, Z₁ is preferably a linear or branched C₁₋₁₀ alkylene unsubstituted or substituted with phenyl, and more preferably methylene, ethane-1,1-diyl, propane-2,2-diyl, butane-2,2-diyl, 1-phenylethane-1,1-diyl, or diphenylmethylene. Further, preferably, Z₁ is cyclohexane-1,1-diyl, O, S, SO, SO₂, or CO.

Preferably, the repeating unit represented by Chemical Formula 1 may be derived from one or more aromatic diol compounds selected from the group consisting of bis(4-hydroxyphenyl)methane, bis(4-hydroxyphenyl)ether, bis(4-hydroxyphenyl)sulfone, bis(4-hydroxypheriyl)sulfoxide, bis(4-hydroxyphenyl)sulfide, bis(4-hydroxyphenyl)ketone, 1,1-bis(4-hydroxyphenyl)ethane, bisphenol A, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, and bis(4-hydroxyphenyl)diphenylmethane.

As used herein, 'derived from aromatic diol compounds' means that a hydroxy group of the aromatic diol compound and a carbonate precursor are reacted to form the repeating unit represented by Chemical Formula 1.

For example, when bisphenol A, which is an aromatic diol compound, and triphosgene, which is a carbonate precursor, are polymerized, the repeating unit represented by Chemical Formula 1 is represented by the following Chemical Formula 1-1:

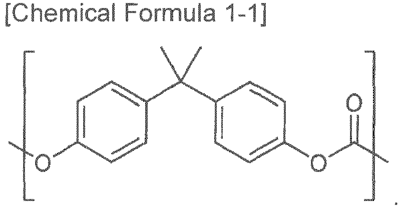

The carbonate precursor used herein may include one or more selected from the group consisting of dimethyl carbonate, diethyl carbonate, dibutyl carbonate, dicyclohexyl carbonate, diphenyl carbonate, ditolyl carbonate, bis(chlorophenyl)carbonate, di-m-cresyl carbonate, dinaphthyl carbonate, bis(diphenyl)carbonate, phosgene, triphosgene, diphosgene, bromophosgene and bishaloformate. Preferably, triphosgene or phosgene may be used.

### Repeating unit represented by Chemical Formula 2

In Chemical Formula 2, preferably, R₅, R₆, R₇, R₈, R₉, R₁₀, R₁₁ and R₁₂ are each independently hydrogen, methyl, chloro, or bromo. Further, preferably, R₅, R₆, R₇, R₈, R₉, R₁₆, R₁₁ and R₁₂ are identical to each other.

Further, preferably, Z₂ and Z₃ are each independently a linear or branched C₁₋₁₀ alkylene unsubstituted or substituted with phenyl, and more preferably methylene, ethane-1,1-diyl, propane-2,2-diyl, butane-2,2-diyl, 1-phenylethane-1,1-diyl, or diphenylmethylene. Further, preferably, Z₂ and Z₃ are cyclohexane-1,1-diyl, O, S, SO, SO₂, or CO. Further, preferably, Z₂ and Z₃ are identical to each other.

Further, A is preferably a linear or branched C₁₋₁₀ alkylene. Further, A is preferably a linear C₁₋₁₀ alkylene, more preferably a linear C₃₋₉ alkylene and most preferably octylene.

Preferably, the repeating unit represented by Chemical Formula 2 is represented by the following Chemical Formula 2-1:

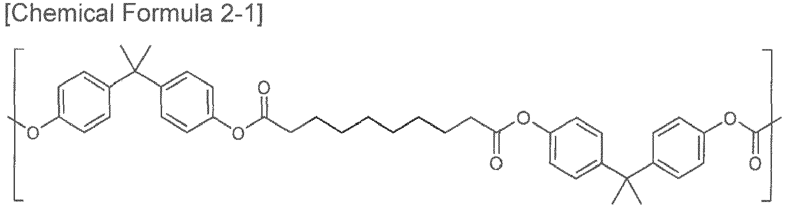

The repeating unit represented by Chemical Formula 2 is formed by reacting an aromatic diol compound represented by Chemical Formula 2-2 and a carbonate precursor: 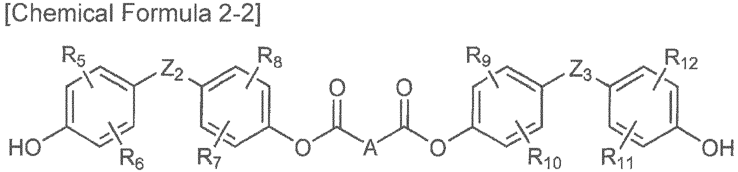 in the Chemical Formula 2-2, R₅, R₆, R₇, R₈, R₉, R₁₀, R₁₁, R₁₂, Z₂, Z₃ and A are the same as previously defined.

Further, the carbonate precursors that can be used for the formation of the repeating units represented by Chemical Formula 2 are the same as those described for the carbonate precursor that can be used for the formation of the repeating unit represented by Chemical Formula 1 described above.

The weight ratio of the repeating unit represented by Chemical Formula 1 and the repeating unit represented by Chemical Formula 2 is preferably 1:0.001 to 1:0.3, and more preferably 1:0.004 to 0.1. Within the above range, the effects of improving physical properties of the copolycarbonate is excellent. The weight ratio referred to in the above corresponds to the weight ratio of the aromatic diol compounds used for the formation of the repeating units of Chemical Formulae 1 and 2.

### Repeating units represented by Chemical Formulae 3 and 4

The repeating units represented by Chemical Formulae 3 and 4 have a polyorganosiloxane structure, and this structure can be introduced in the copolycarbonate to improve various physical properties.

The copolycarbonate according to the present invention comprises the repeating unit represented by Chemical Formula 3 and the repeating unit represented by Chemical Formula 4.

In Chemical Formula 3, each of X₁ is independently preferably C₂₋₁₀ alkylene, more preferably C₂₋₄ alkylene, and most preferably propane-1,3-diyl.

Also, preferably, each of R₁₃ is independently hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, allyl, 2,2,2-trifluoroethyl, 3,3,3-trifluoropropyl, phenyl, or naphthyl. In addition, each of R₁₃ is independently preferably C₁₋₁₀ alkyl, more preferably C₁₋₆ alkyl, more preferably C₁₋₃ alkyl and most preferably methyl.

Further, preferably, n is an integer of not less than 10, not less than 15, not less than 20, not less than 25, not less than 30, not less than 31, or not less than 32; and not more than 50, not more than 45, not more than 40, not more than 39, not more than 38, or not more than 37.

In Chemical Formula 4, each of X₂ is independently preferably C₂₋₁₀ alkylene, more preferably C₂₋₆ alkylene, and most preferably isobutylene.

Further, preferably, Y₁ is hydrogen.

Further, preferably, each of R₁₄ is independently hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, allyl, 2,2,2-trifluoroethyl, 3,3,3-trifluoropropyl, phenyl, or naphthyl. Further, preferably, each of R₁₄ is independently C₁₋₁₀ alkyl, more preferably C₁₋₆ alkyl, more preferably C₁₋₃ alkyl, and most preferably methyl.

Preferably, m is an integer of not less than 40, not less than 45, not less than 50, not less than 55, not less than 56, not less than 57, or not less than 58; and not more than 80, not more than 75, not more than 70, not more than 65, not more than 64, not more than 63, or not more than 62.

The repeating unit represented by Chemical Formula 3 and the repeating unit represented by Chemical Formula 4 are, respectively, derived from a siloxane compound represented by the following Chemical Formula 3-1 and a siloxane compound represented by the following Chemical Formula 4-1: 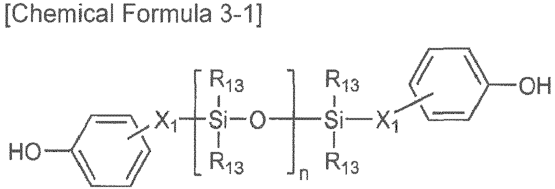 in the Chemical Formula 3-1,
X₁, R₁₃ and n are the same as previously defined. 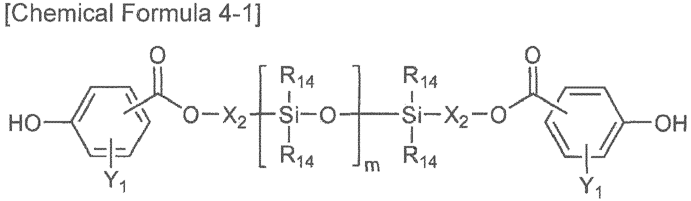 in the Chemical Formula 4-1,
X₂, Y₁, R₁₄ and m are the same as previously defined.

As used herein, 'derived from a siloxane compound' means that a hydroxy group of the respective siloxane compound and a carbonate precursor are reacted to form the repeating unit represented by Chemical Formula 3 and the repeating unit represented by Chemical Formula 4. Further, the carbonate precursors that can be used for the formation of the repeating units represented by Chemical Formulae 3 and 4 are the same as those described for the carbonate precursor that can be used for the formation of the repeating unit represented by Chemical Formula 1 described above.

The methods for preparing the siloxane compound represented by Chemical Formula 3-1 and the siloxane compound represented by Chemical Formula 4-1 are represented by the following Reaction Schemes 1 and 2, respectively: 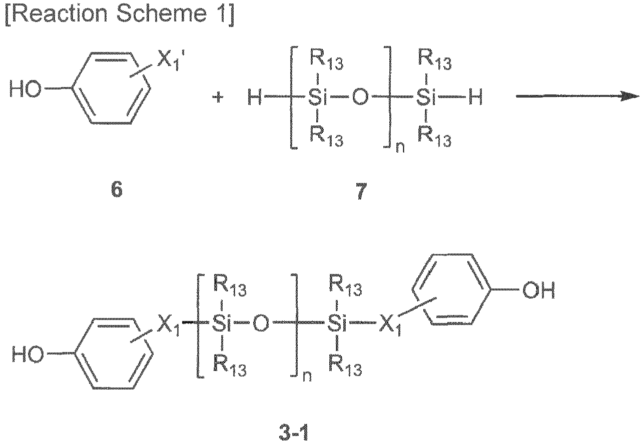 in the Reaction Scheme 1,
X₁' is C₂₋₁₀ alkenyl, and
X₁, R₁₃ and n are the same as previously defined. 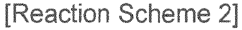 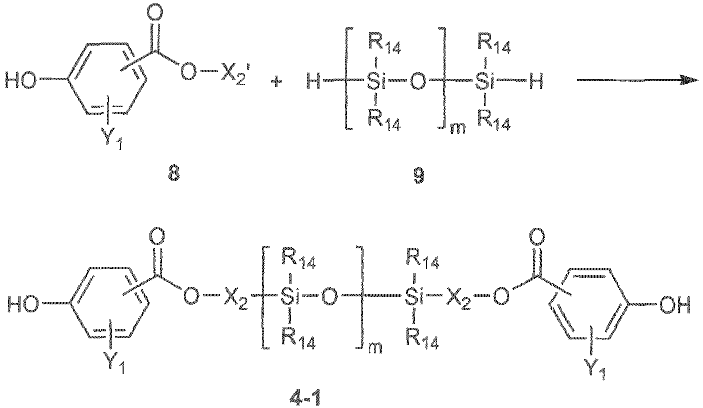
in the Reaction Scheme 2,
X₂' is C₂₋₁₀ alkenyl, and
X₂, Y₁, R₁₄ and m are the same as previously defined.

In Reaction Scheme 1 and Reaction Scheme 2, the reaction is preferably conducted in the presence of a metal catalyst. As the metal catalyst, a Pt catalyst is preferably used. The Pt catalyst used herein may include one or more selected from the group consisting of Ashby catalyst, Karstedt catalyst, Lamoreaux catalyst, Speier catalyst, PtCl₂(COD), PtCl₂(benzonitrile)₂ and H₂PtBr₆. The metal catalyst may be used in an amount of not less than 0.001 parts by weight, not less than 0.005 parts by weight, or not less than 0.01 parts by weight; and not more than 1 part by weight, not more than 0.1 part by weight, or not more than 0.05 part by weight, based on 100 parts by weight of the compounds represented by the Chemical Formulae 7 or 9.

Further, the above reaction temperature is preferably 80 to 100 °C. Further, the above reaction time is preferably 1 to 5 hours.

In addition, the compounds represented by Chemical Formulae 7 or 9 can be prepared by reacting an organodisiloxane and an organocyclosiloxane in the presence of an acid catalyst, and n and m may be adjusted by adjusting the amount of the reactants used. The reaction temperature is preferably 50 to 70 °C. Also, the reaction time is preferably 1 to 6 hours.

The above organodisiloxane may include one or more selected from the group consisting of tetramethyldisiloxane, tetraphenyldisiloxane, hexamethyldisiloxane and hexaphenyldisiloxane. In addition, the above organocyclosiloxane may include, for example, organocyclotetrasiloxane. As one example thereof, octamethylcyclotetrasiloxane, octaphenylcyclotetrasiloxane and the like can be included.

The above organodisiloxane can be used in an amount of not less than 0.1 parts by weight, or not less than 2 parts by weight; and not more than 10 parts by weight or not more than 8 parts by weight, based on 100 parts by weight of the organocyclosiloxane.

The above acid catalyst that may be used herein includes one or more selected from the group consisting of H₂SO₄, HClO₄, AlCl₃, SbCl₅, SnCl₄ and acid clay (fuller's earth). Further, the acid catalyst may be used in an amount of not less than 0.1 parts by weight, not less than 0.5 parts by weight, or not less than 1 part by weight; and not more than 10 parts by weight, not more than 5 parts by weight or not more than 3 parts by weight, based on 100 parts by weight of the organocyclosiloxane.

When the copolycarbonate according to the present invention comprises all of the repeating unit represented by Chemical Formula 3 and the repeating unit represented by Chemical Formula 4, the content of the respective repeating units can be adjusted to improve various physical properties of the copolycarbonate simultaneously. The weight ratio between the above repeating units may be from 1:99 to 99:1. Preferably, the weight ratio is from 3:97 to 97:3, from 5:95 to 95:5, from 10:90 to 90:10, or from 15:85 to 85:15, and more preferably from 20:80 to 80:20. The weight ratio of the above repeating units corresponds to the weight ratio of siloxane compounds, for example the siloxane compound represented by Chemical Formula 3-1 and the siloxane compound represented by Chemical Formula 4-1.

Preferably, the repeating unit represented by Chemical Formula 3 is represented by the following Chemical Formula 3-2: 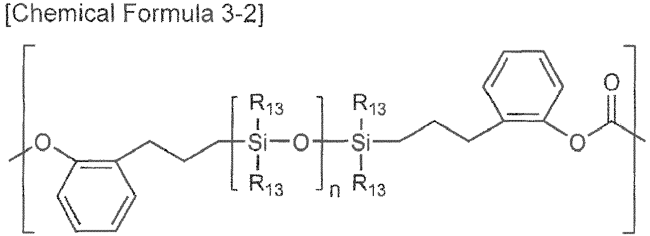 in the Chemical Formula 3-2, R₁₃ and n are the same as previously defined. Preferably, R₁₃ is methyl.

Also, preferably, the repeating unit represented by Chemical Formula 4 is represented by the following Chemical Formula 4-2: 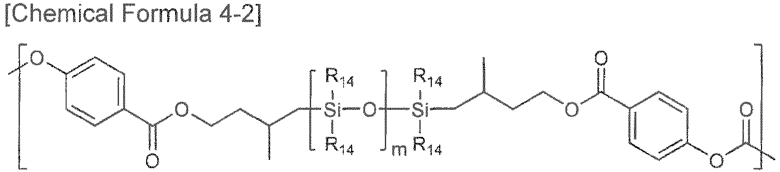 in the Chemical Formula 4-2, R₁₄ and m are the same as previously defined. Preferably, R₁₄ is methyl.

Preferably, the weight ratio between the weight of the repeating unit represented by Chemical Formula 1, and the total weight of the repeating unit represented by Chemical Formula 3 and the repeating unit represented by Chemical Formula 4 (Chemical Formula 1 : (Chemical Formula 3 and Chemical Formula 4)) is 1:0.001 to 1:0.2, and more preferably 1:0.01 to 1:0.1. The weight ratio of the repeating units corresponds to the weight ratio of the aromatic diol compound used in the formation of the repeating unit of Chemical Formula 1 and the siloxane compound used in the formation of the repeating units of Formulae 3 and 4.

### Copolycarbonate

The copolycarbonate according to the present invention comprises i) a repeating unit represented by the Chemical Formula 1, ii) a repeating unit represented by the Chemical Formula 2, and iii) a repeating unit represented by the Chemical Formula 3 and a repeating unit represented by the Chemical Formula 4. Preperably, the copolycarbonate is a random copolymer.

The copolycarbonate according to the present invention can be prepared by a preparation method comprising a step of polymerizing two kinds of aromatic diol compounds, the carbonate precursor and one or more kinds of siloxane compounds.

The aromatic diol compound, the carbonate precursor and the siloxane compounds are the same as previously described.

During the polymerization, the siloxane compounds can be used in an amount of not less than 0.1% by weight, not less than 0.5% by weight, not less than 1% by weight, or not less than 1.5% by weight; and not more than 20% by weight, not more than 10% by weight, not more than 7% by weight, not more than 5% by weight, not more than 4% by weight, not more than 3% by weight or not more than 2% by weight, based on 100% by weight in total of the two kinds of aromatic diol compounds, the carbonate precursor and the siloxane compounds.

Also, the above two kinds of aromatic diol compounds may be used in an amount of not less than 40% by weight, not less than 50% by weight, or not less than 55% by weight; and not more than 80% by weight, not more than 70% by weight, or not more than 65% by weight, based on 100% by weight in total of the two kinds of aromatic diol compounds, the carbonate precursor and the siloxane compounds.

The above carbonate precursor may be used in an amount of not less than 10% by weight, not less than 20% by weight, or not less than 30% by weight; and not more than 60% by weight, not more than 50% by weight, or not more than 40% by weight, based on 100% by weight in total of the two kinds of aromatic diol compounds, the carbonate precursor and the siloxane compounds.

Further, as the polymerization method, an interfacial polymerization method can be used as one example. In this case, there is an effect in that the polymerization reaction can be made at low temperature and atmospheric pressure and it is easy to control the molecular weight. The above interfacial polymerization is preferably conducted in the presence of an acid binder and an organic solvent. Furthermore, the above interfacial polymerization may comprise, for example, the steps of conducting pre-polymerization, then adding a coupling agent and again conducting polymerization. In this case, the copolycarbonate having a high molecular weight can be obtained.

The materials used in the interfacial polymerization are not particularly limited as long as they can be used in the polymerization of polycarbonates. The used amount thereof may be controlled as required.

The acid binding agent may include, for example, alkali metal hydroxides such as sodium hydroxide or potassium hydroxide, or amine compounds such as pyridine.

The organic solvent is not particularly limited as long as it is a solvent that can be usually used in the polymerization of polycarbonate. As one example, halogenated hydrocarbon such as methylene chloride or chlorobenzene may be used.

Further, during the interfacial polymerization, a reaction accelerator, for example, a tertiary amine compound such as triethylamine, tetra-n-butyl ammonium bromide and tetra-n-butylphosphonium bromide or a quaternary ammonium compound or a quaternary phosphonium compound may be further used for accelerating the reaction.

In the interfacial polymerization, the reaction temperature is preferably from 0 to 40 °C and the reaction time is preferably from 10 minutes to 5 hours. Further, during the interfacial polymerization reaction, pH is preferably maintained at 9 or more, or 11 or more.

In addition, the interfacial polymerization may be conducted by further including a molecular weight modifier. The molecular weight modifier may be added before the initiation of polymerization, during the initiation of polymerization, or after the initiation of polymerization.

As the above molecular weight modifier, mono-alkylphenol may be used. As one example, the mono-alkylphenol is one or more selected from the group consisting of p-tert-butylphenol, p-cumyl phenol, decyl phenol, dodecyl phenol, tetradecyl phenol, hexadecyl phenol, octadecyl phenol, eicosyl phenol, docosyl phenol and triacontyl phenol, and preferably p-tert-butylphenol. In this case, the effect of adjusting the molecular weight is great.

The above molecular weight modifier is contained, for example, in an amount of not less than 0.01 parts by weight, not less than 0.1 parts by weight, or not less than 1 part by weight; and not more than 10 parts by weight, not more than 6 parts by weight, or not more than 5 parts by weight, based on 100 parts by weight of the aromatic diol compound. Within this range, the required molecular weight can be obtained.

Preferably, the copolycarbonate according to the present invention has a weight average molecular weight (g/mol) of 1,000 to 100,000. More preferably, the above weight average molecular weight (g/mol) is not less than 15,000, not less than 16,000, not less than 17,000, not less than 18,000, not less than 19,000, not less than 20,000, not less than 21,000, not less than 22,000, not less than 23,000, not less than 24,000, or not less than 25,000; and not more than 40,000, not more than 39,000, not more than 38,000, not more than 37,000, not not more than 36,000, not not more than 35,000, or not more than 34,000.

Further, preferably, the copolycarbonate according to the present invention has an impact strength at room temperature of 700 to 1100 J/m as measured at 23 °C in accordance with ASTM D256 (1/8 inch, Notched Izod). More preferably, the impact strength at room temperature (J/m) is not less than 750, not less than 800, or not less than 850. Further, the impact strength at room temperature (J/m) is more excellent when the value is higher, and thus it is not limited to any upper limit. As one example, however, it may be not more than 1050, or not more than 1000.

Preferably, the copolycarbonate according to the present invention has impact strength at low temperature of 600 to 1000 J/m as measured at -30 °C in accordance with ASTM D256 (1/8 inch, Notched Izod). More preferably, the impact strength at low-temperature (J/m) is not less than 650, not less than 700, not less than 750, not less than 800, not less than 850, not less than 900, or not less than 950. In addition, the impact strength at low temperature (J/m) is more excellent when the value is higher, and thus it is not limited to any upper limit. As one example, however, it may be not more than 990, or not more than 980.

Preferably, the copolycarbonate according to the present invention has YI (Yellow Index) of not more than 2 as measured in accordance with ASTM D1925. More preferably, YI (Yellow Index) is not more than 1.9, or not more than 1.8, and more than 0.

Further, preferably, the copolycarbonate according to the present invention has a melt index of 5 to 20 g/10 min as measured in accordance with ASTM D1238 (conditions of 300 °C and 1.2 kg). More preferably, the melt index (g/10 min) is not less than 6, not less than 7, or not less than 8; and not more than 19, not more than 18, not more than 17, not more than 16, not more than 15, or not more than 14.

In addition, the present invention provides a polycarbonate composition comprising the above-mentioned copolycarbonate and polycarbonate.

The copolycarbonate may be used alone, but also may be used together with the polycarbonate as needed to control the physical properties of the copolycarbonate.

The above polycarbonate is dinstiguished from the copolycarbonate according to the present invention in that a polysiloxane structure is not introduced in a main chain of the polycarbonate.

Preferably, the above polycarbonate comprises a repeating unit represented by the following Chemical Formula 5: 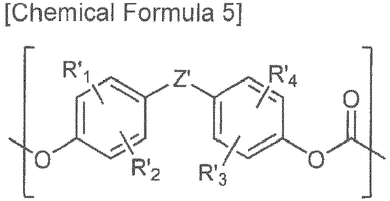 in the Chemical Formula 5,
R'₁, R'₂, R'₃ and R'₄ are each independently hydrogen, C₁₋₁₀ alkyl, C₁₋₁₀ alkoxy, or halogen, and
Z' is C₁₋₁₀ alkylene unsubstituted or substituted with phenyl, C₃₋₁₅ cycloalkylene unsubstituted or substituted with C₁₋₁₀ alkyl, O, S, SO, SO₂ or CO.

Further, preferably, the above polycarbonate has a weight average molecular weight of 15,000 to 35,000 g/mol. More preferably, the above weight average molecular weight (g/mol) is not less than 20,000, not less than 21,000, not less than 22,000, not less than 23,000, not less than 24,000, not less than 25,000, not less than 26,000, not less than 27,000, or not less than 28,000. Further, the above weight average molecular weight (g/mol) is not more than 34,000, not more than 33,000, or not more than 32,000.

The repeating unit represented by Chemical Formula 5 is formed by reacting the aromatic diol compound and the carbonate precursor. The aromatic diol compound and the carbonate precursor that can be used herein are the same as previously described for the repeating unit represented by Chemical Formula 1.

Preferably, R'₁, R'₂, R'₃, R'₄ and Z' in Chemical Formula 5 are the same as previously described for R₁, R₂, R₃, R₄ and Z in Chemical Formula 1, respectively.

Further, preferably, the repeating unit represented by Chemical Formula 5 is represented by the following Chemical Formula 5-1:

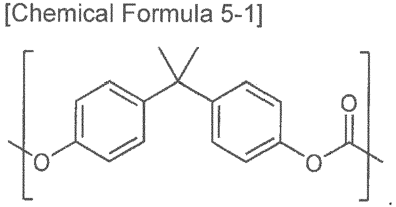

In the polycarbonate composition, the weight ratio of the copolycarbonate and the polycarbonate is preferably from 99:1 to 1:99, more preferably from 90:10 to 50:50, and most preferably from 80:20 to 60:40.

In addition, the present invention provides an article comprising the above-mentioned copolycarbonate or the copolycarbonate composition.

Preferably, the above article is an injection molded article. In addition, the article may further comprise, for example, one or more selected from the group consisting of antioxidants, heat stabilizers, light stabilizers, plasticizers, antistatic agents, nucleating agents, flame retardants, lubricants, impact reinforcing agents, fluorescent brightening agents, ultraviolet absorbers, pigments and dyes.

The method for preparing the article may comprise the steps of mixing the copolycarbonate according to the present invention and additives such as antioxidants using a mixer, extrusion-molding the mixture with an extruder to produce a pellet, drying the pellet and then injecting the dried pellet with an injection molding machine.

### [ADVANTAGEOUS EFFECTS]

As set forth above, since the copolycarbonate according to the present invention introduces a particular structure, it has effects of improving impact strength at low temperature, YI (Yellow Index) and MI (melt index) simultaneously.

### [DETAILED DESCRIPTION OF THE EMBODIMENTS]

Below, preferred embodiments will be provided in order to assist in the understanding of the present disclosure. However, these examples are provided only for illustration of the present invention, and should not be construed as limiting the present invention to these examples.

### Preparation Example 1: Preparation of polyorganosiloxane (AP-30)

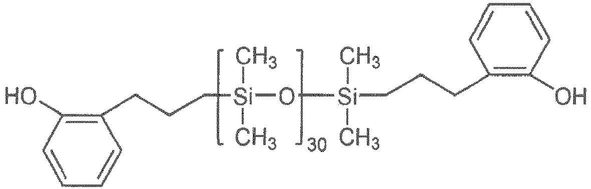

42.5 g (142.8 mmol) of octamethylcyclotetrasiloxane and 2.26 g (16.8 mmol) of tetramethyldisiloxane were mixed. The mixture was then placed in 3L flask together with 1 part by weight of an acid clay (DC-A3) relative to 100 parts by weight of octamethylcyclotetrasiloxane, and reacted at 60 °C for 4 hours. After completion of the reaction, the reaction product was diluted with ethyl acetate and quickly filtered using a celite. The repeating unit (n) of the unmodified polyorganosiloxane thus prepared was 30 when confirmed through ¹H NMR.

To the resulting terminal-unmodified polyorganosiloxane, 9.57 g (71.3 mmol) of 2-allylphenol and 0.01 g (50 ppm) of Karstedt's platinum catalyst were added and reacted at 90 °C for 3 hours. After completion of the reaction, the unreacted polyorganosiloxane was removed by conducting evaporation under the conditions of 120 °C and 1 torr. The terminal-modified polyorganosiloxane thus prepared was designated as 'AP-30'. AP-30 was pale yellow oil and the repeating unit (n) was 30 when confirmed through ¹H NMR using a Varian 500MHz and further purification was not required.

### Preparation Example 2: Preparation of polyorganosiloxane (MB-60)

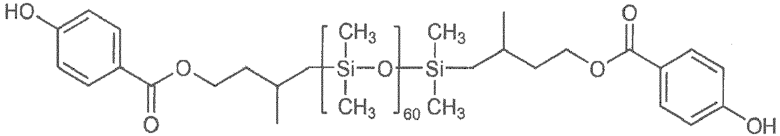

47.60 g (160 mmol) of octamethylcyclotetrasiloxane and 1.5 g (11 mmol) of tetramethyldisiloxane were mixed. The mixture was then introduced in 3L flask together with 1 part by weight of an acid clay (DC-A3) relative to 100 parts by weight of octamethylcyclotetrasiloxane, and reacted at 60 °C for 4 hours. After completion of the reaction, the reaction product was diluted with ethyl acetate and quickly filtered using a celite. The repeating unit (m) of the terminal-unmodified polyorganosiloxane thus prepared was 60 when confirmed through ¹H NMR.

To the resulting terminal-unmodified polyorganosiloxane, 6.13 g (29.7 mmol) of 3-methylbut-3-enyl 4-hydroxybenzoate and 0.01 g (50 ppm) of Karstedt's platinum catalyst were added and reacted at 90 °C for 3 hours. After completion of the reaction, the unreacted siloxane was removed by conducting evaporation under the conditions of 120 °C and 1 torr. The terminal-modified polyorganosiloxane thus prepared was designated as 'MB-60'. MB-60 was pale yellow oil, the repeating unit (m) was 60 when confirmed through ¹H NMR using a Varian 500MHz and further purification was not required.

### Example 1

978.4 g of Bisphenol A (BPA), 3.927 g of BPDA (bis(4-(2-(4-hydroxyphenyl)propan-2-yl)phenyl) decanedioate), 1,620 g of NaOH 32% aqueous solution, and 7,500 g of distilled water were added to 20L glass reactor. After confirming that BPA was completely dissolved under nitrogen atmosphere, 3,670 g of methylene chloride, 17.9 g of p-tert-butylphenol (PTBP), and 44.028 g of polyorganosiloxane previously prepared and 4.892 g of polyorganosiloxane (MB-60) of Preparation Example 2 were added and mixed. To this mixture, 3,850 g of methylene chloride in which 542.5 g of triphosgene was dissolved was added dropwise for one hour. At this time, a NaOH aqueous solution was maintained at pH 12. After completion of the dropwise addition, the reaction product was aged for 15 minutes, and 195.7g of triethylamine was dissolved in methylene chloride and added. After 10 minutes, pH was adjusted to 3 with 1N aqueous hydrochloric acid solution and then washed three times with distilled water. Subsequently, the methylene chloride phase was separated, and then precipitated in methanol to give a copolycarbonate resin in the form of a powder.

### Examples 2 to 6 and Comparative Examples 1 to 4

The copolycarbonate were prepared by the same method as in Example 1, except that the reaction materials were used in the content as shown in Table 1 below.

**[Table 1]**

| | BPA(g) | BPDA(g) | AP-30(g) | MB-60(g) |
|---|---|---|---|---|
| Example 1 | 978.4 | 3.927 | 44.028 | 4.892 |
| Example 2 | 974.4 | 14.66 | 43.848 | 4.872 |
| Example 3 | 961.8 | 48.17 | 43.281 | 4.809 |
| Example 4 | 974.4 | 14.66 | 46.284 | 2.436 |
| Example 5¹⁾ | 974.4 | 14.66 | 43.281 | 4.809 |
| Example 6 | 974.4 | 14.66 | 43.848 | 4.872 |
| Comparative Example 1 | 979.9 | - | - | - |
| Comparative Example 2 | 961.8 | - | 41.031 | 4.559 |
| Comparative Example 3 | 969.0 | 29.06 | - | - |
| Comparative Example 4 | 979.9 | - | 48.995 | - |
| 1) 31.92 g of PTBP was used | | | | |

### Experimental Example: Confirmation of Characteristics of Copolycarbonate

The weight average molecular weight of the copolycarbonates prepared in the examples and comparative examples were measured by GPC using PC Standard with Agilent 1200 series.

In addition, with respect to 1 part by weight of the respective copolycarbonates prepared in the examples and comparative examples, 0.050 parts by weight of tris(2,4-di-tert-butylphenyl)phosphite, 0.010 parts by weight of octadecyl-3-(3,5-di-tert-butyl-4-hydroxyphenyl)propionate, and 0.030 parts by weight of pentaerythritol tetrastearate were added thereto, and the resulting mixture was pelletized using a Φ30mm twin-screw extruder provided with a vent, and was injection-molded at a cylinder temperature of 300 °C and a mold temperature of 80 °C using an injection molding machine N-20C (manufactured by JSW, Ltd.) to prepare a desired specimen.

The characteristics of the above specimens were determined by the following method and the results were shown in Table 2 below.
1) Impact strength at room temperature: measured at 23 °C in accordance with ASTM D256 (1/8 inch, Notched Izod).
2) Impact strength at low temperature: measured at -30 °C in accordance with ASTM D256 (1/8 inch, Notched Izod).
3) YI (Yellow Index): A specimen (width/length/thickness = 60 mm/ 40 mm/ 3 mm) was prepared by injection molding and YI (Yellow Index) was measured using Color-Eye 7000A (manufactured by X-Rite Ltd.) in accordance with ASTM D1925. The measurement condition was as follows.
- Measurement temperature: room temperature (23 °C)
- Aperture size: Large area of view
- Measurement method: transmittance was measured in a spectral range (360 nm to 750 nm).

4) Melt index (MI): measured in accordance with ASTM D1238 (conditions of 300 °C and 1.2 kg).

**[Table 2]**

| | Mw (g/mol) | Impact strength at room temperature (J/m) | Impact strength at low temperature (J/m) | YI | MI (g/10 min) |
|---|---|---|---|---|---|
| Example 1 | 34000 | 1000 | 980 | 1.79 | 6.1 |
| Example 2 | 34000 | 960 | 924 | 1.78 | 7.5 |
| Example 3 | 34000 | 890 | 830 | 1.75 | 13.2 |
| Example 4 | 34000 | 840 | 635 | 1.76 | 7.2 |
| Example 5 | 27000 | 780 | 600 | 1.69 | 19.3 |
| Example 6 | 34000 | 834 | 685 | 1.79 | 8.3 |
| Comparative Example 1 | 34000 | 950 | 190 | 1.75 | 5.7 |
| Comparative Example 2 | 34000 | 1090 | 980 | 5.9 | 4.1 |
| Comparative Example 3 | 34000 | 820 | 230 | 0.93 | 14.4 |
| Comparative Example 4 | 34000 | 890 | 484 | 5.3 | 4.2 |

## Claims

1. A copolycarbonate comprising:
i) a repeating unit represented by the following Chemical Formula 1, ii) a repeating unit represented by the following Chemical Formula 2, and iii) a repeating unit represented by the following Chemical Formula 3 and a repeating unit represented by the following Chemical Formula 4,
wherein the copolycarbonate has a weight average molecular weight of 1,000 to 100,000, measured as indicated in the description: 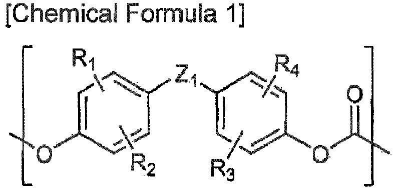 in the ChemicalFormula 1,
R₁, R₂, R₃ and R₄ are each independently hydrogen, C₁₋₁₀ alkyl, C₁₋₁₀ alkoxy, or halogen, and
Z₁ is C₁₋₁₀ alkylene unsubstituted or substituted with phenyl, C₃₋₁₅ cycloalkylene unsubstituted or substituted with C₁₋₁₀ alkyl, O, S, SO, SO₂, or CO, 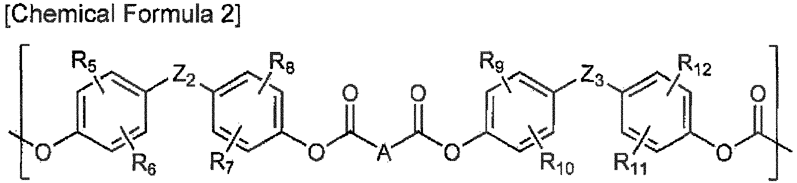
in the Chemical Formula 2,
R₅, R₆, R₇, R₈, R₉, R₁₀, R₁₁ and R₁₂ are each independently hydrogen, C₁₋₁₀ alkyl, C₁₋₁₀ alkoxy, or halogen, and
Z₂ and Z₃ are each independently C₁₋₁₀ alkylene unsubstituted or substituted with phenyl, C₃₋₁₅ cycloalkylene unsubstituted or substituted with C₁₋₁₀ alkyl, O, S, SO, SO₂, or CO, and
A is C₁₋₁₅ alkylene, 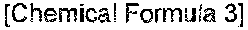 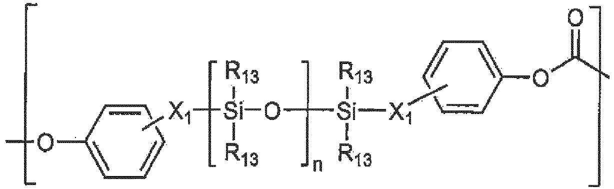
in the ChemicalFormula 3,
each of X₁ is independently C₁₋₁₀ alkylene,
each of R₁₃ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
n is an integer of 10 to 200, 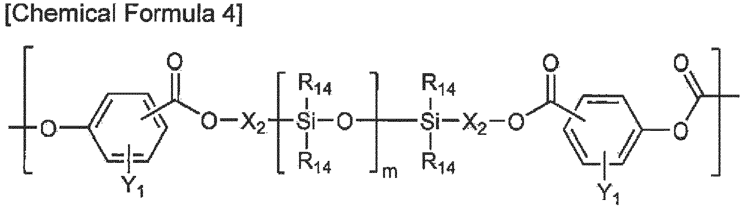
in the ChemicalFormula 4,
each of X₂ is independently C₁₋₁₀ alkylene,
each of Y₁ is independently hydrogen, C₁₋₆ alkyl, halogen, hydroxy, C₁₋₆ alkoxy, or C₆₋₂₀ aryl,
each of R₁₄ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
m is an integer of 10 to 200,

2. The copolycarbonate of claim 1, wherein
the repeating unit represented by Chemical Formula 1 is derived from one or more aromatic diol compounds selected from the group consisting of bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, bisphenol A, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, and bis(4-hydroxyphenyl)diphenylmethane.

3. The copolycarbonate of claim 1, wherein
the repeating unit represented by Chemical Formula 1 is represented by the following Chemical Formula 1-1:

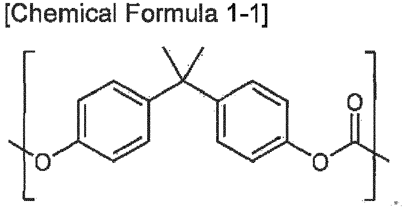

4. The copolycarbonate of claim 1, wherein
R₈, R₆, R₇, R₈, R₉, R₁₀, R₁₁ and R₁₂ are each independently hydrogen, methyl, chloro, or bromo.

5. The copolycarbonate of claim 1, wherein
Z₂ and Z₃ are each independently a linear or branched C₁₋₁₀ alkylene unsubstituted or substituted with phenyl, cyclohexane-1,1-diyl, O, S, SO, SO₂, or CO.

6. The copolycarbonate of claim 1, wherein
A is a linear C₁₋₁₀ alkylene.

7. The copolycarbonate of claim 1, wherein
the repeating unit represented by Chemical Formula 2 is represented by the following Chemical Formula 2-1:

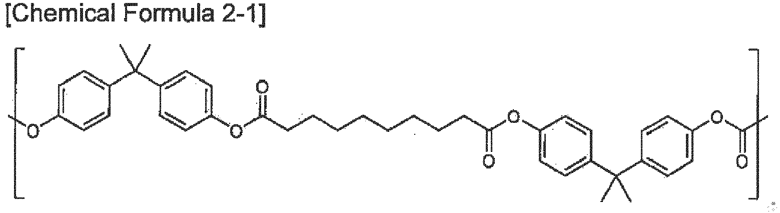

8. The copolycarbonate of claim 1, wherein
the weight ratio of the repeating unit represented by Chemical Formula 1 and the repeating unit represented by Chemical Formula 2 is 1:0.001 to 1:0.3.

9. The copolycarbonate of claim 1, wherein
the weight ratio between the weight of the repeating unit represented by Chemical Formula 1 and the total weight of the repeating unit represented by Chemical Formula 3 and the repeating unit represented by Chemical Formula 4 is 1:0.001 to 1:0.1.

10. The copolycarbonate of claim 1, wherein
the repeating unit represented by Chemical Formula 3 is represented by the following Chemical Formula 3-2:

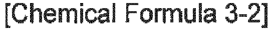

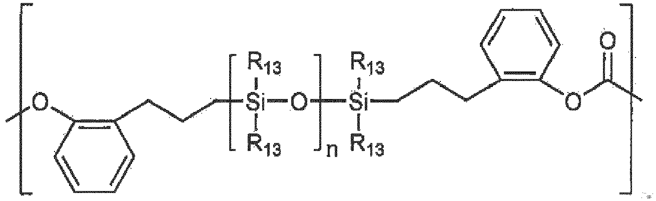

11. The copolycarbonate of claim 10, wherein
R₁₃ is methyl.

12. The copolycarbonate of claim 1, wherein
the repeating unit represented by Chemical Formula 4 is represented by the following Chemical Formula 4-2:

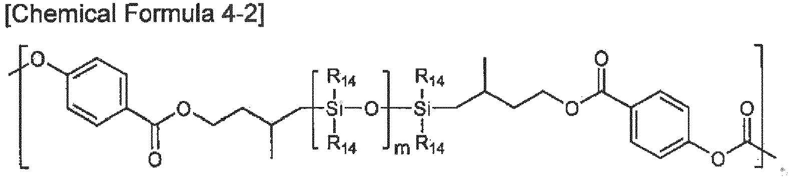

13. The copolycarbonate of claim 12, wherein
R₁₄ is methyl.

14. The copolycarbonate of claim 1, wherein
the copolycarbonate has a weight average molecular weight of 15,000 to 40,000 g/mol, measured as indicated in the description.

15. A polycarbonate composition comprising the copolycarbonate of any one of claims 1 to 14, and a polycarbonate.

16. The polycarbonate composition of claim 15, wherein
a polysiloxane structure is not introduced in a main chain of the polycarbonate.

17. The polycarbonate composition of claim 15, wherein
the above polycarbonate comprises a repeating unit represented by the following Chemical Formula 5: 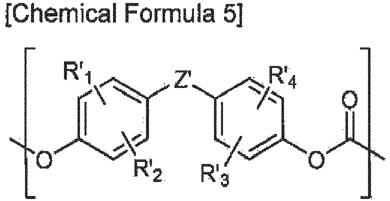 in the Chemical Formula 5,
R'₁, R'₂, R'₃ and R'₄ are each independently hydrogen, C₁₋₁₀ alkyl, C₁₋₁₀ alkoxy, or halogen, and
Z' is C₁₋₁₀ alkylene unsubstituted or substituted with phenyl, C₃₋₁₅ cycloalkylene unsubstituted or substituted with C₁₋₁₀ alkyl, O, S, SO, SO₂ or CO.

## Patentansprüche

1. Copolycarbonat, umfassend:
i) eine durch die folgende chemische Formal 1 dargestellte Wiederholungseinheit, ii) eine durch die folgende chemische Formel 2 dargestellte Wiederholungseinheit, und iii) eine durch die folgende chemische Formel 3 und eine durch die folgende chemische Formel 4 dargestellte Wiederholungseinheit,
wobei das Copolycarbonat ein Gewichtsmittelmolekulargewicht von 1.000 bis 100.000 aufweist, gemessen wie in der Beschreibung angegeben: 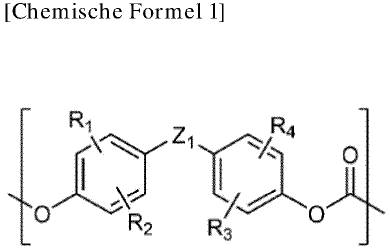 wobei in der chemischen Formel 1
R₁, R₂, R₃ und R₄ jeweils unabhängig Wasserstoff, C₁₋₁₀-Alkyl, C₁₋₁₀-Alkoxy oder Halogen sind, und
Z₁ C₁₋₁₀-Alkylen, unsubstituiert oder substituiert mit Phenyl, C₃₋₁₅-Cycloalkylen, unsubstituiert oder substituiert mit C₁₋₁₀-Alkyl, O, S, SO, SO₂ oder CO ist, 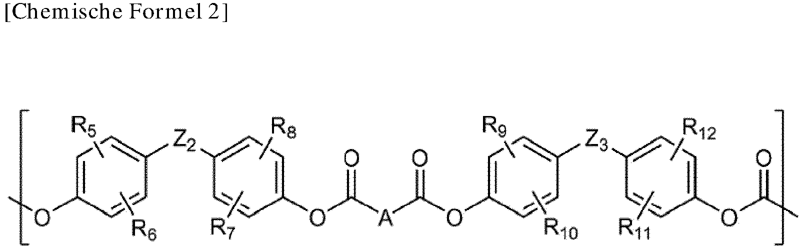
wobei in der chemischen Formel 2
Rs, R₆, R₇, R₈, R₉, R₁₀, R₁₁ und R₁₂ jeweils unabhängig Wasserstoff, C₁₋₁₀-Alkyl, C₁₋₁₀-Alkoxy oder Halogen sind, und
Z₂ und Z₃ jeweils unabhängig C₁₋₁₀-Alkylen, unsubstituiert oder substituiert mit Phenyl, C₃₋₁₅-Cycloalkylen, unsubstituiert oder substituiert mit C₁₋₁₀-Alkyl, O, S, SO, SO₂ oder CO sind, und
A C₁₋₁₅-Alkylen ist, 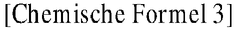 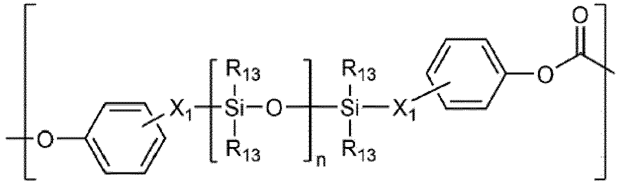
wobei in der chemischen Formel 3
jedes X₁ unabhängig C₁₋₁₀-Alkylen ist,
jedes R₁₃ unabhängig Wasserstoff; C₁₋₁₅-Alkyl, unsubstituiert oder substituiert mit Oxiranyl, Oxiranyl-substituiertem C₁₋₁₀-Alkoxy oder C₆₋₂₀-Aryl; Halogen; C₁₋₁₀-Alkoxy; Allyl; C₁₋₁₀-Halogenalkyl; oder C₆₋₂₀-Aryl ist; und
n eine ganze Zahl von 10 bis 200 ist, 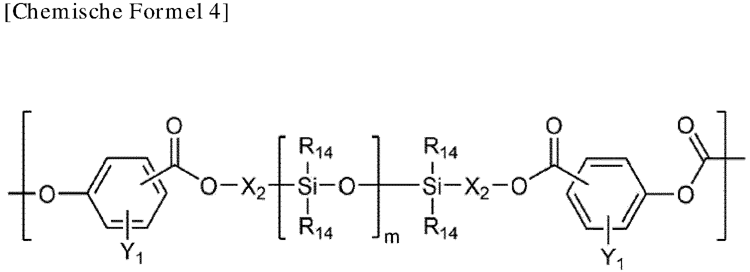
wobei in der chemischen Formel 4
jedes X₂ unabhängig C₁₋₁₀-Alkylen ist,
jedes Y₁ unabhängig Wasserstoff, C₁₋₆-Alkyl, Halogen, Hydroxy, C₁₋₆-Alkoxy oder C₆₋₂₀-Aryl ist,
jedes R₁₄ unabhängig Wasserstoff; C₁₋₁₅-Alkyl, unsubstituiert oder substituiert mit Oxiranyl, Oxiranyl-substituiertem C₁₋₁₀-Alkoxy oder C₆₋₂₀-Aryl; Halogen; C₁₋₁₀-Alkoxy; Allyl; C₁₋₁₀-Halogenalkyl; oder C₆₋₂₀-Aryl ist, und
m eine ganze Zahl von 10 bis 200 ist.

2. Copolycarbonat nach Anspruch 1, wobei die durch chemische Formel 1 dargestellte Wiederholungseinheit abgeleitet ist aus einer oder mehreren aromatischen Diolverbindungen, ausgewählt aus der Gruppe bestehend aus Bis(4-hydroxyphenyl)methan, Bis(4-hydroxyphenyl)ether, Bis(4-hydroxyphenyl)sulfon, Bis(4-hydroxyphenyl)sulfoxid, Bis(4-hydroxyphenyl)sulfid, Bis(4-hydroxyphenyl)keton, 1,1-Bis(4-hydroxyphenyl)ethan, Bisphenol A, 2,2-Bis(4-hydroxyphenyl)butan, 1,1-Bis(4-hydroxyphenyl)cyclohexan, 2,2-Bis(4-hydroxy-3,5-dibromophenyl)propan, 2,2-Bis(4-hydroxy-3,5-dichlorphenyl)propan, 2,2-Bis(4-hydroxy-3-bromphenyl)propan, 2,2-Bis(4-hydroxy-3-chlorphenyl)propan, 2,2-Bis(4-hydroxy-3-methylphenyl)propan, 2,2-Bis(4-hydroxy-3,5-dimethylphenyl)propan, 1,1-Bis(4-hydroxyphenyl)-1-phenylethan und Bis(4-hydroxyphenyl)diphenylmethan.

3. Copolycarbonat nach Anspruch 1, wobei die durch chemische Formel 1 dargestellte Wiederholungseinheit durch die folgende chemische Formel 1-1 dargestellt ist:

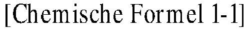

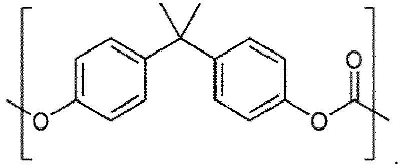

4. Copolycarbonat nach Anspruch 1, wobei R₅, R₆, R₇, R₈, R₉, R₁₀, R₁₁ und R₁₂ jeweils unabhängig Wasserstoff, Methyl, Chlor oder Brom sind.

5. Copolycarbonat nach Anspruch 1, wobei Z₂ und Z₃ jeweils unabhängig ein lineares oder verzweigtes C₁₋₁₀-Alkylen, unsubstituiert oder substituiert mit Phenyl, Cyclohexan-1,1-diyl, O, S, SO, SO₂ oder CO sind.

6. Copoylcarbonat nach Anspruch 1, wobei A ein lineares C₁₋₁₀-Alkylen ist.

7. Copolycarbonat nach Anspruch 1, wobei die durch chemische Formel 2 dargestellte Wiederholungseinheit durch die folgende chemische Formel 2-1 dargestellt ist:

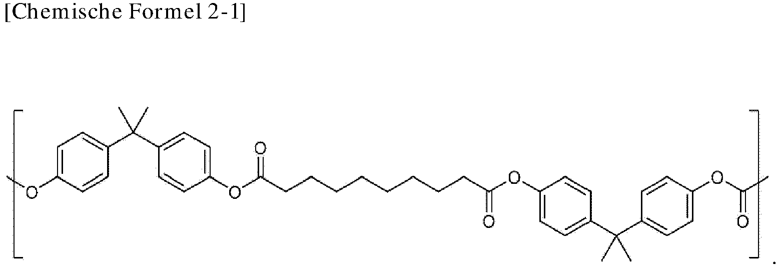

8. Copolycarbonat nach Anspruch 1, wobei das Gewichtsverhältnis der durch chemische Formel 1 dargestellten Wiederholungseinheit und der durch chemische Formel 2 dargestellten Wiederholungseinheit 1:0,001 bis 1:0,3 ist.

9. Copolycarbonat nach Anspruch 1, wobei das Gewichtsverhältnis zwischen dem Gewicht der durch chemische Formel 1 dargestellten Wiederholungseinheit und dem Gesamtgewicht der durch chemische Formel 3 dargestellten Wiederholungseinheit und der durch chemische Formel 4 dargestellten Wiederholungseinheit 1:0,001 bis 1:0,1 ist.

10. Copolycarbonat nach Anspruch 1, wobei die durch chemische Formel 3 dargestellte Wiederholungseinheit durch die folgende chemische Formel 3-2 dargestellt ist:

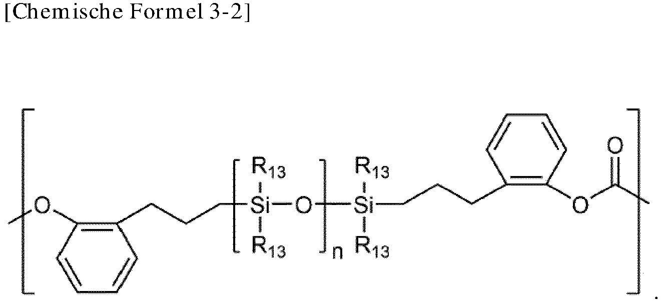

11. Copolycarbonat nach Anspruch 10, wobei R₁₃ Methyl ist.

12. Copolycarbonat nach Anspruch 1, wobei die durch chemische Formel 4 dargestellte Wiederholungseinheit durch die folgende chemische Formel 4-2 dargestellt ist:

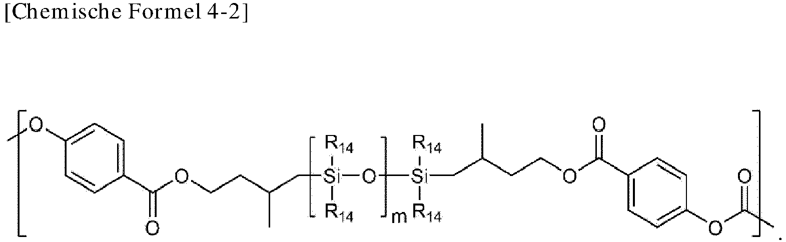

13. Copolycarbonat nach Anspruch 12, wobei R₁₄ Methyl ist.

14. Copolycarbonat nach Anspruch 1, wobei das Copolycarbonat ein Gewichtsmittelmolekulargewicht von 15.000 bis 40.000 g/mol aufweist, gemessen wie in der Beschreibung angegeben.

15. Polycarbonatzusammensetzung umfassend das Copolycarbonat nach einem der Ansprüche 1 bis 14 und ein Polycarbonat.

16. Polycarbonatzusammensetzung nach Anspruch 15, wobei eine Polysiloxanstruktur in einer Hauptkette des Polycarbonats nicht eingeführt ist.

17. Polycarbonatzusammensetzung nach Anspruch 15, wobei das obige Polycarbonat eine durch die folgende chemische Formel 5 dargestellte Wiederholungseinheit umfasst: 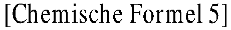 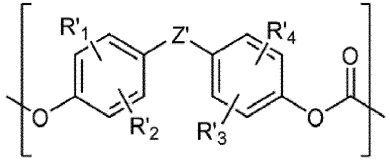
wobei in der chemischen Formel 5 R'₁, R'₂, R'₃ und R'₄ jeweils unabhängig Wasserstoff, C₁₋₁₀-Alkly, C₁₋₁₀-Alkoxy oder Halogen sind, und
Z'C₁₋₁₀-Alkylen, unsubstituiert oder substituiert mit Phenyl, C₃₋₁₅-Cycloalkylen, unsubstituiert oder substituiert mit C₁₋₁₀-Alkyl, O, S, SO, SO₂ oder CO ist.

## Revendications

1. Copolycarbonate comprenant :
1) un motif récurrent représenté par la formule chimique 1 suivante, ii) un motif récurrent représenté par la formule chimique 2 suivante, et iii) un motif récurrent représenté par la formule chimique 3 suivante et un motif récurrent représenté par la formule chimique 4 suivante,
dans lequel le copolycarbonate a un poids moléculaire moyen en poids de 1.000 à 100.000, mesuré comme indiqué dans la description : 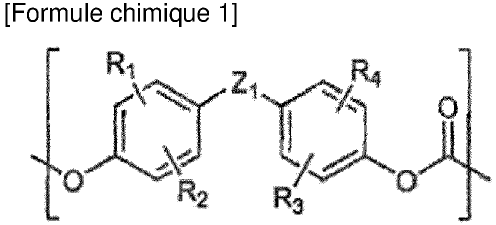 dans la formule chimique 1,
R₁, R₂, R₃ et R₄ représentent chacun indépendamment l'hydrogène, un alkyle en C₁ à C₁₀, un alcoxy en C₁ à C₁₀ ou un halogène, et
Z₁ représente un allylène en C₁ à C₁₀ non substitué ou substitué par un phényle, un cycloalkylène en C₃ à C₁₅ non substitué ou substitué par un alkyle en C₁ à C₁₀, O, S, SO, SO₂ ou CO, 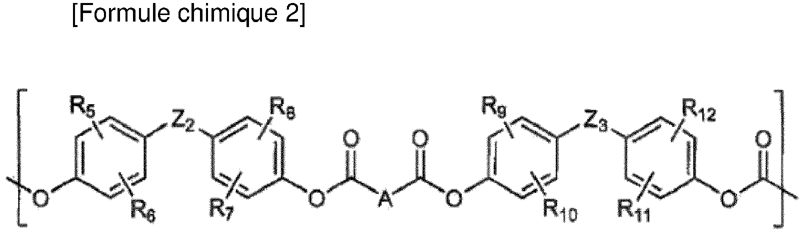
dans la formule chimique 2,
R₅, R₆, R₇, R₈, R₉, R₁₀, R₁₁ et R₁₂ représentent chacun indépendamment l'hydrogène, un alkyle en C₁ à C₁₀, un alcoxy en C₁ à C₁₀ ou un halogène, et
Z₂ et Z₃ représentent chacun indépendamment un alkylène en C₁ à C₁₀ non substitué ou substitué par un phényle, un cycloalkylène en C₃ à C₁₅ non substitué ou substitué par un alkyle en C₁ à C₁₀, O, S, SO, SO₂ ou CO, et
A représente un alkylène en C₁ à C₁₅, 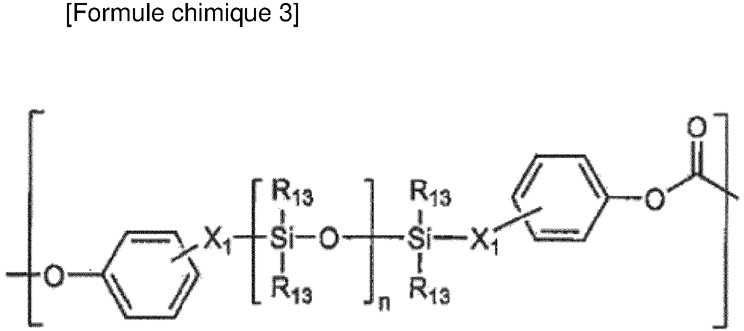
dans la formule chimique 3,
chacun des X₁ représente indépendamment un alkylène en C₁ à C₁₀,
chacun des R₁₃ représente indépendamment l'hydrogène ; un alkyle en C₁ à C₁₅ non substitué ou substitué par un oxiranyle, un alcoxy en C₁ à C₁₀ substitué par un oxiranyle ou un aryle en C₆ à C₂₀ ; un halogène ; un alcoxy en C₁ à C₁₀, un allyle ; un haloalkyle en C₁ à C₁₀ ; ou un aryle en C₆ à C₂₀, et
n désigne un nombre entier valant de 10 à 200, 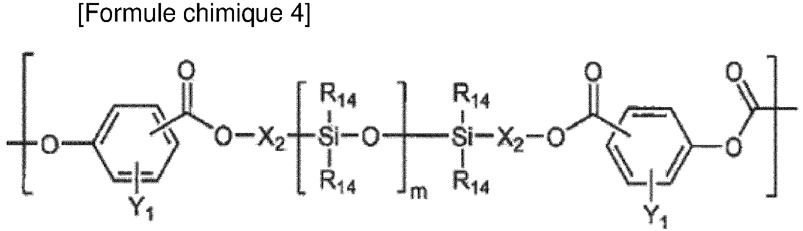
dans la formule chimique 4,
chacun des X₂ représente indépendamment un alkylène en C₁ à C₁₀,
chacun des Y₁ représente indépendamment l'hydrogène, un alkyle en C₁ à C₆, un halogène, un hydroxy, un alcoxy en C₁ à C₆ ou un aryle en C₆ à C₂₀,
chacun des R₁₄ représente indépendamment l'hydrogène ; un alkyle en C₁ à C₁₅ non substitué ou substitué par un oxiranyle, un alcoxy en C₁ à C₁₀ substitué par un oxiranyle, ou un aryle en C₆ à C₂₀ ; un halogène ; un alcoxy en C₁ à C₁₀, un allyle ; un haloalkyle en C₁ à C₁₀ ; ou un aryle en C₆ à C₂₀, et
n désigne un nombre entier valant de 10 à 200.

2. Copolycarbonate selon la revendication 1, dans lequel
le motif récurrent représenté par la formule chimique 1 est dérivé d'un ou de plusieurs composés diol aromatiques sélectionnés dans le groupe constitué de bis(4-hydroxyphényl)méthane, bis(4-hydroxyphényle)éther, bis(4-hydroxyphényle)sulfone, bis(4-hydroxyphényle)sulfoxyde, bis(4-hydroxyphényle)sulfure, bis(4-hydroxyphényle)cétone, 1,1-bis(4-hydroxyphényle)éthane, bisphénol A, 2,2-bis(4-hydroxyphényle)butane, 1,1-bis(4-hydroxyphényle)cyclohexane, 2,2-bis(4-hydroxy-3,5-dibromophényl)propane, 2,2-bis(4-hydroxy-3,5-dichlorophényl)propane, 2,2-bis(4-hydroxy-3-bromophényl)propane, 2,2-bis(4-hydroxy-3-chlorophényl)propane, 2, 2-bis(4-hydroxy-3-méthylphényl)propane, 2,2-bis(4-hydroxy-3,5-diméthylphényl)propane, 1,1-bis(4-hydroxyphényl)-1-phényléthane et bis(4-hydroxyphényl)diphénylméthane.

3. Copycarbonate selon la revendication 1, dans lequel
le motif récurrent représenté par la formule chimique 1 répond à la formule chimique 1-1 suivante :

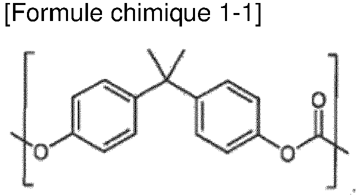

4. Copolycarbonate selon la revendication 1, dans lequel
R₅, R₆, R₇, R₈, R₉, R₁₀, R₁₁ et R₁₂ représentent chacun indépendamment l'hydrogène, le méthyle, le chloro ou le bromo.

5. Copolycarbonate selon la revendication 1, dans lequel
Z₂ et Z₃ représentent chacun indépendamment un alkylène en C₁ à C₁₀ linéaire ou ramifié non substitué ou substitué par un phényle, un cyclohexane-1,1-diyl, O, S, SO, SO₂ ou CO.

6. Copolycarbonate selon la revendication 1, dans lequel
A représente un alkylène linéaire en C₁ à C₁₆.

7. Copolycarbonate selon la revendication 1, dans lequel
le motif récurrent représenté par la formule chimique 2 répond à la formule chimique 2-1 suivante :

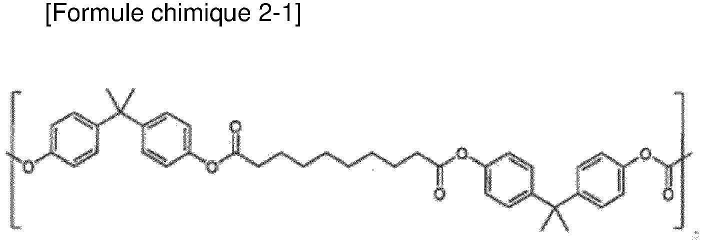

8. Copolycarbonate selon la revendication 1, dans lequel
le rapport pondéral du motif récurrent représenté par la formule chimique 1 et du motif récurrent représenté par la formule chimique 2 est compris entre 1 : 0,001 et 1 : 0,3.

9. Copolycarbonate selon la revendication 1, dans lequel
le rapport pondéral entre le poids du motif récurrent représenté par la formule chimique 3 et du motif récurrent représenté par la formule chimique 4 est compris entre 1 : 0,001 et 1 : 0,1.

10. Copolycarbonate selon la revendication 1, dans lequel
le motif récurrent représenté par la formule chimique 3 répond à la formule chimique 3-2 suivante :

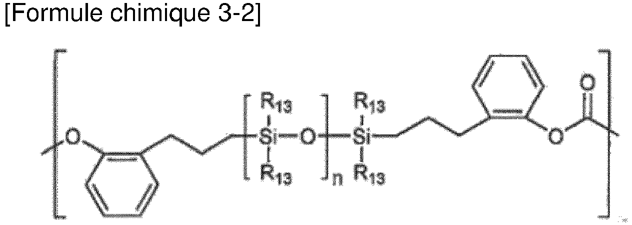

11. Copolycarbonate selon la revendication 10, dans lequel
R₁₃ représente le méthyle.

12. Copolycarbonate selon la revendication 1, dans lequel
le motif récurrent représenté par la formule chimique 4 répond à la formule chimique 4-2 suivante :

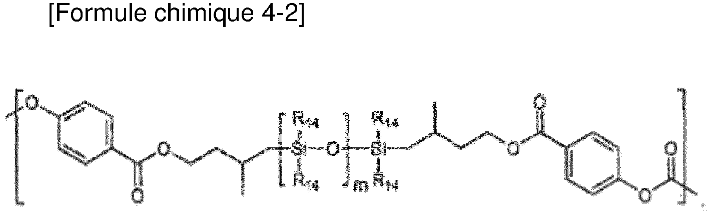

13. Copolycarbonate selon la revendication 12, dans lequel
R₁₄ représente le méthyle.

14. Copolycarbonate selon la revendication 1, dans lequel
le copolycarbonate a un poids moléculaire moyen en poids de 15,000 à 40,000 g/mol, mesuré comme indiqué dans la description.

15. Composition de polycarbonate comprenant le copolycarbonate selon l'une quelconque des revendications 1 à 14 et un polycarbonate.

16. Composition de polycarbonate selon la revendication 15, dans laquelle
une structure polysiloxane n'est pas introduite dans une chaîne principale du polycarbonate.

17. Composition de polycarbonate selon la revendication 15, dans laquelle
le polycarbonate susmentionné comprend un motif récurrent représenté par la formule chimique 5 suivante : 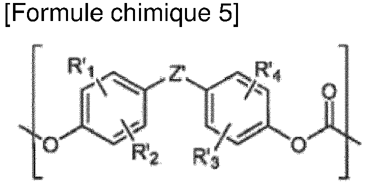 dans la formule chimique 5,
R'₁, R'₂, R'₃ et R'₄ représentent chacun indépendamment l'hydrogène, un alkyle en C₁ à C₁₀, un alcoxy en C₁ à C₁₀ ou un halogène, et
Z₁ représente un alkylène en C₁ à C₁₀ non substitué ou substitué par un phényle, un cycloalkylène en C₃ à C₁₅ non substitué ou substitué par un alkyle en C₁ à C₁₀, O, S, SO, SO₂ ou CO.
